# FASCICULE DE BREVET EUROPEEN

(11) **EP 4 510 880 B1**
(45) Date de publication et mention de la délivrance du brevet: **29.10.2025**
(21) Numéro de dépôt: 23722419.1
(22) Date de dépôt: 04.05.2023
(51) Int. Cl.: A44C 5/00, A44C 9/00, G06K 19/077

(54) **PIECE DE BIJOUTERIE FINE A MOYEN DE PAIEMENT**
FEINSCHMUCKSTÜCK MIT ZAHLUNGSMITTELN
ITEM OF FINE JEWELLERY HAVING PAYMENT MEANS

(30) Priorité: 06.05.2022 FR 2204334
(43) Date de publication de la demande: 26.02.2025
(73) Titulaire: Valeur Declaree, 75002 Paris (FR)
(72) Inventeur: CLERC, Fanny, 75002 Paris (FR)
(74) Mandataire: Cabinet Netter
(86) Numéro de dépôt international: PCT/EP2023/061840
(87) Numéro de publication internationale: WO 2023/213964

(56) Documents cités:
- WO-A1-2022/084886
- CN-A- 106 562 524
- GB-A- 2 559 621
- US-A1- 2014 260 424

## Description

L'invention concerne le domaine de la bijouterie, notamment les bracelets et bagues et pendentifs.

La Demanderesse a observé de profondes évolutions dans le domaine de la bijouterie fine s'agissant des matériaux et des formes. Toutefois, une constante est que le bijou fin est afonctionnel en ce sens qu'il est dépourvu de fonction technique pour le porteur dudit bijou. Un bijou peut être pourvu de mécanismes tel qu'un fermoir dont le but est la mise en place ou la tenue du bijou. Il s'agit de fonctions subordonnées à la fonction ornementale.

US11083256 propose une bague dont la surface intérieure est creuse en section transversale pour former un canal annulaire. Un transpondeur NFC comprenant une antenne en forme de bobine gravée sur un substrat souple mis en forme cylindrique est installé dans le canal annulaire. Un joint de résine encapsule le transpondeur NFC et le substrat souple. Or un modèle de bague est fabriqué en plusieurs tailles pour différents diamètres de doigt. A chaque taille correspond un joint de résine, un transpondeur NFC et un substrat souple particuliers. Ceci complique notablement la fabrication. De plus, le signal émis par l'antenne disposée dans le canal annulaire intérieur à la bague est mal transmis. Ceci impose des contraintes sur le choix du matériau constituant la bague, la forme de la bague et ses dimensions en raison de la dimension du transpondeur NFC et du substrat. L'antenne du transpondeur NFC fait le tour de la bague. Or le choix du matériau, de la forme et des dimensions est de grande importance pour un bijou et relève de la création artistique. Imposer de telles contraintes est donc un inconvénient important. WO2022/084886A1 décrit une pièce de bijouterie selon le préambule de la revendication 1.

La Demanderesse a conçu et mis au point un bijou pourvu d'un moyen de paiement indépendant de la taille du bijou et respectant la liberté de conception ornementale du bijou tout en offrant une transmission de qualité.

L'invention propose une pièce de bijouterie, notamment bague ou bracelet ou pendentif, comprenant un corps présentant une surface intérieure, une surface extérieure et une lumière traversant le corps de la surface intérieure à la surface extérieure, le corps étant réalisé en un matériau choisi parmi : or, argent, platine, titane, palladium, acier ou vermeil; une coque externe formant une partie de la surface extérieure de la pièce de bijouterie et en contact avec le corps, la coque externe étant réalisée en un matériau choisi parmi : pierre précieuse, pierre fine, pierre ornementale, cuir ; une coque interne formant une partie de la surface intérieure et en contact avec le corps, un logement fermé étant ménagé entre la coque externe et la coque interne sensiblement au droit de ou dans la lumière, le logement étant en arc de cercle, la coque interne étant réalisée en un matériau choisi parmi : pierre précieuse, pierre fine, pierre ornementale, cuir; un tag souple disposé dans le logement et comprenant une puce électronique et une antenne disposée autour de la puce électronique, caractérisée en ce qu'une vis maintient ensemble la coque externe et la coque interne. Le corps peut être réalisé dans une vaste gamme de matériaux, notamment de métaux précieux. Les dimensions du tag sont conservées d'une taille à une autre d'un modèle de bijou, et pour plusieurs modèles de bijou. Le tag est caché au sein du bijou et offre ainsi une absence d'impact visuel et esthétique.

Dans un mode de réalisation, deux lumières sont ménagées traversant le corps de la surface intérieure à la surface extérieure, les deux lumières étant séparées par une traverse faisant partie du corps d'anneau. La transmission du signal est préservée et le montage facilité.

Dans un mode de réalisation, la vis est en prise dans la traverse. Le montage est simple et robuste.

Dans un mode de réalisation, la vis est en prise dans le corps au voisinage d'un bord de la lumière, une vis supplémentaire étant en prise dans le corps au voisinage d'un bord de la lumière du côté opposé. La lumière peut être de taille importante.

Dans un mode de réalisation, la vis coopère avec un alésage fileté ménagé dans le corps ou avec un écrou. Le montage est robuste.

Dans un mode de réalisation, le corps est monobloc. La résistance mécanique est satisfaisante.

Dans un mode de réalisation, la coque externe présente une épaisseur comprise entre 1,0 et 3,0 mm.

Dans un mode de réalisation, la coque interne présente une épaisseur comprise entre 1,0 et 2,0 mm. Une grande liberté ornementale en découle.

Dans un mode de réalisation, ladite pierre précieuse, fine ou ornementale est choisie parmi :
- Diamant, Rubis, Saphir,
- Béryl, notamment émeraude, aigue-Marine, héliodore, morganite,
- Tourmaline, notamment verdélite, rubellite, paraïba, indicolite, schorl,
- Topaze, notamment topaze sky blue, topaze swiss blue, topaze London blue,
- Grenat, notamment grenat demantoïde, grenat almandin, grenat tsavorite, grenat spessartite, grenat hessonite, grenat rhodolite, grenat pyrope,
- Quartz, notamment quartz œil de chat, quartz œil de faucon, quartz œil de tigre, quartz œil de taureau, aventurine, améthyste, citrine, prasiolite, quartz rose, quartz bleu, quart rouge, quartz fumé,
- Calcédoine notamment agate, chrysoprase, cornaline, onyx, sardoine, piétersite,
- Jaspe notamment jaspe rouge, jaspe sanguin, jaspe héliotrope,
- Feldspaths notamment amazonite, pierre de lune, labradorite, pierre de soleil,
- Opale, notamment opale de feu, cacholong, opale noble,
- Jade notamment jade, jadéite, jade néphrite, charoïte,
- Péridot, tanzanite, iolite, zircon, cyanite, spinelle, cristal de roche, kunzite, sodalite, azurite, turquoise, rhodonite, rhodochrosite, malachite, chrysocolle, sugilite, chrysobéryl, andalousite, diopside, pinolite, lapis-lazuli,
- Nacre, corail, ambre, bois silicifié.

Dans un mode de réalisation, la puce électronique forme une protubérance par rapport à l'antenne et la coque externe présente une concavité locale correspondant à ladite protubérance. L'encombrement est optimisé.

Dans un mode de réalisation, le corps admet un plan de symétrie passant par l'axe dudit anneau et présente sur sa surface extérieure un redan adapté à la coque externe. La surface extérieure de la pièce est sensiblement lisse.

Dans un mode de réalisation, le corps est un corps d'anneau.

Dans un mode de réalisation, le tag est démontable.

Dans un mode de réalisation, le tag est caché par le reste du bijou.

D'autres caractéristiques et avantages de l'invention apparaîtront à l'examen de la description détaillée ci-après.

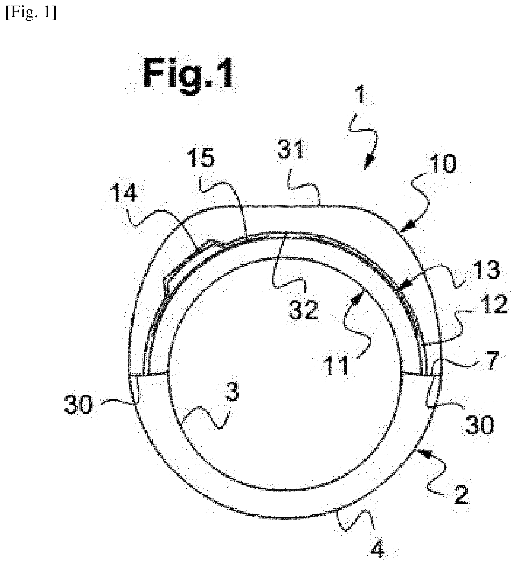

La [Fig.1] est une vue en coupe transversale d'une pièce de bijouterie selon un aspect de l'invention.
La [Fig.2] est une vue éclatée de face d'une pièce de bijouterie selon un aspect de l'invention.
La [Fig.3] est une vue éclatée en perspective d'une pièce de bijouterie selon un aspect de l'invention.
La [Fig.4] est une vue en perspective de la pièce de bijouterie de la [Fig.3] en cours de montage.
La [Fig.5] est une vue en perspective de la pièce de bijouterie de la [Fig.3] montée.
La [Fig.6] est une vue éclatée en coupe transversale d'une pièce de bijouterie selon un plan de coupe normal à l'axe.
La [Fig.7] est une vue en coupe transversale d'une pièce de bijouterie selon le même plan de coupe que la [Fig.6].
La [Fig.8] est une vue en perspective du tag souple selon un aspect de l'invention.
La [Fig.9] est une vue éclatée en perspective d'une pièce de bijouterie selon un autre aspect de l'invention.
La [Fig.10] est une vue montée en perspective de la pièce de bijouterie de la [Fig.9].
La [Fig.11] est une vue éclatée en perspective de la pièce de bijouterie de la [Fig.9].
La [Fig.12] est une vue montée en coupe de la pièce de bijouterie de la [Fig.9].
La [Fig.13] est une vue montée en coupe de la pièce de bijouterie de la [Fig.9].
La [Fig.14] est une vue éclatée de face de la pièce de bijouterie de la [Fig.9].
La [Fig.15] est une vue montée en perspective d'une pièce de bijouterie selon un autre aspect de l'invention.
La [Fig.16] est une vue éclatée en perspective de la pièce de bijouterie de la [Fig.15].
La [Fig.17] est une vue éclatée en perspective de la pièce de bijouterie de la [Fig.15].
La [Fig.18] est une vue montée en coupe de la pièce de bijouterie de la [Fig.15].
La [Fig.19] est une vue montée en coupe de la pièce de bijouterie de la [Fig.15].
La [Fig.20] est une vue éclatée de face de la pièce de bijouterie de la [Fig.15].

Dans le domaine de la bijouterie, le respect de la liberté artistique du créateur de l'objet est une base. De manière conventionnelle, la liberté artistique était tempérée par les limites mécaniques des matériaux mis en œuvre. La recherche de la hardiesse des formes a mené à la mise au point de matériaux plus résistants. Simultanément, la mise en œuvre de matériaux originaux, souvent fragiles, a aussi été souhaitée.

Puis la miniaturisation de l'électronique de communication a rendu envisageable son incorporation dans un bijou. Toutefois, les exigences de débit de données et de qualité de transmission sont élevées, et ce d'autant plus qu'un bijou de haute qualité ne peut pas se satisfaire d'une transmission de bas de gamme. Prenant en compte l'analyse qu'elle avait ainsi faite, la Demanderesse a mis au point une pièce de bijouterie adaptée à une électronique de radiocommunication performante. La Demanderesse a identifié plusieurs difficultés. Le métal constituant l'essentiel du volume d'un bijou forme en général un mauvais transmetteur d'ondes radio, voire constitue un écran atténuant fortement les ondes.

Par ailleurs, un bijou comprend parfois d'autres matériaux non métalliques. La Demanderesse a cherché à mettre à profit lesdits matériaux non métalliques pour favoriser la transmission des ondes radio malgré l'utilisation de métaux précieux.

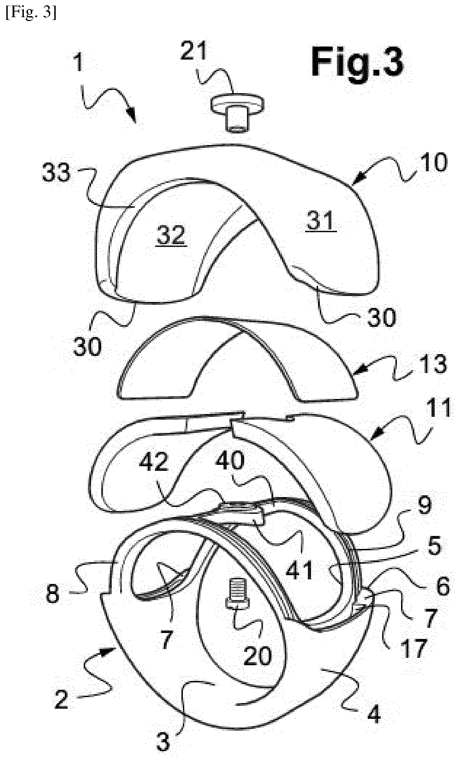

Ainsi, la pièce de bijouterie 1 présente une forme générale annulaire. Il peut s'agir d'une bague. La pièce de bijouterie 1 comprend un corps d'anneau 2. Le corps d'anneau 2 est structurel en ce sens qu'il confère à la pièce de bijouterie 1 sa forme générale. Le corps d'anneau 2 présente un alésage 3 ou surface intérieure, une surface extérieure 4 et une lumière 5 traversant le corps d'anneau 2 de l'alésage 3 à la surface extérieure 4. Les bords 6 du corps d'anneau 2 présentent une forme annulaire libre. Ici, les bords 6 du corps d'anneau 2 sont arrondis. En d'autres termes, le corps d'anneau 2 présente une branche commune et deux branches 8, 9 distantes axialement selon l'axe de l'anneau, les deux branches distantes rejoignant la branche commune à chacune de leurs extrémités, voir [Fig.3].

Dans le mode de réalisation illustré, le corps d'anneau 2 est annulaire monobloc. Le corps d'anneau 2 est symétrique par rapport à un plan normal à l'axe de l'alésage 3. Le corps d'anneau 2 présente une première portion massive, en partie basse des figures, et une deuxième portion, en partie haute des figures. La première portion présente une épaisseur dans le sens radial variable avec un minimum à distance de la deuxième portion. La deuxième portion comprend les deux branches 8, 9 espacées axialement délimitant la lumière 5. Chaque branche 8, 9 présente une forme d'arc. En coupe transversale, la branche 8, 9 est de section arrondie vers le bord 6 et vers l'alésage 3. A l'opposé de l'alésage 3, la section de la branche 8, 9 est, ici, droite, en particulier parallèle à l'axe de l'alésage 3. Vers la lumière 5, la section de la branche 8, 9 est droite, par exemple orientée radialement. Au moins un redan peut être prévu pour faciliter le positionnement et le maintien d'autres organes ci-dessous. Le redan est ménagé sur le bord de la lumière à l'opposé de l'alésage 3 et du bord 6, de manière continue ou discontinue, par exemple sur les branches 8, 9.

Les branches 8, 9 présentent une épaisseur inférieure à l'épaisseur de la première portion, au moins au voisinage de ladite première portion. Une surface sensiblement radiale 7 est ainsi formée entre la première portion et la deuxième portion de chaque côté du corps d'anneau 2. Une concavité 17 peut être ménagée dans ladite surface sensiblement radiale 7. La concavité 17 épouse la forme du corps d'anneau 2. La concavité 17 est borgne.

Le corps d'anneau 2 peut être réalisé en un matériau faisant obstacle à la transmission des ondes radio. Le corps d'anneau 2 est réalisé en un matériau choisi parmi : or, argent, platine, palladium, vermeil, titane, acier.

La pièce de bijouterie 1 comprend une coque externe 10 formant une partie de la surface extérieure 4 de la pièce de bijouterie 1 et en contact avec le corps d'anneau 2. La pièce de bijouterie 1 comprend une coque interne 11 formant une partie de la surface dudit alésage 3 et en contact avec le corps d'anneau 2. Un logement 12 fermé à l'état monté est ménagé entre la coque externe 10 et la coque interne 11 sensiblement au droit de ou dans la lumière 5. Le logement 12 est en arc de cercle. La pièce de bijouterie 1 comprend un tag 13 souple disposé dans le logement 12. Le tag 13 comprend une puce électronique 14 et une antenne 15 disposée autour de la puce électronique 14.

La pièce de bijouterie 1 comprend une vis 20 maintenant ensemble la coque externe 10 et la coque interne 11. Dans le mode de réalisation représenté, est prévu en plus un écrou 21 formant un boulon avec la vis 20. La vis 20 présente une tête de faible épaisseur. La vis 20 est amenée par l'intérieur du corps d'anneau 2. L'écrou 21 est amené par l'extérieur. La vis 20 vient en prise avec l'écrou 21. La vis et l'écrou peuvent être dans le même matériau que le corps d'anneau 2 ou choisis dans le même groupe de matériaux. L'écrou peut comprendre en plus une pierre précieuse, fine ou ornementale.

La coque externe 10 est monobloc. La coque externe 10 vient recouvrir la lumière 5 du côté extérieur, en d'autres termes à l'opposé de l'alésage 3. La coque externe 10 peut aussi recouvrir en partie les branches 8, 9. La coque externe 10 présente une forme d'arc. La coque externe 10 présente une épaisseur comprise entre 1,0 et 3,0 mm.

Les extrémités libres circonférentielles 30 de la coque externe 10 viennent en contact avec les surfaces sensiblement radiales 7. Les extrémités libres circonférentielles 30 de la coque externe 10 peuvent être munies de protubérances pour venir en saillie dans les concavités 17. La coque externe 10 présente une surface extérieure 31 libre pour une conception artistique ou pour supporter un autre organe. La coque externe 10 présente une surface intérieure 32 délimitant le logement 12. La surface intérieure peut être ménagée en creux par rapport à un cylindre formant une enveloppe géométrique de la coque externe 10 pour augmenter le volume du logement 12. Deux nervures 33 peuvent être formées en bordure dudit creux. Les nervures peuvent être en contact avec ledit redan des branches 8, 9.

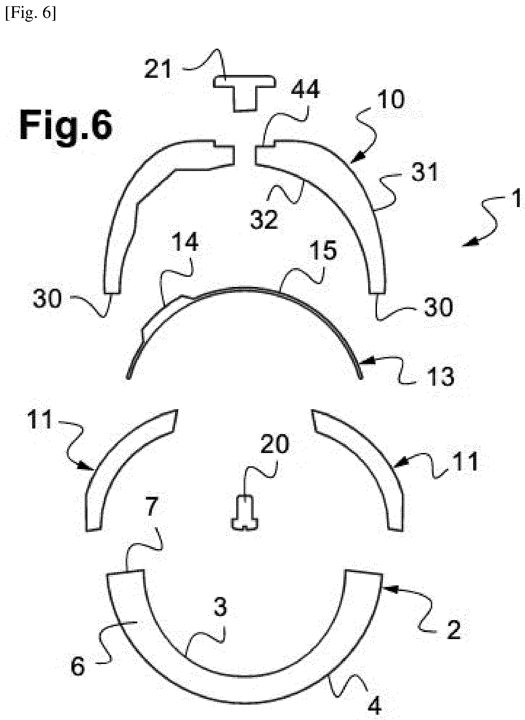

Un trou 34, voir [Fig.6], traversant est ménagé dans la coque externe 10. En variante, le trou est borgne et fileté débouchant sur la surface intérieure 32 pour engagement avec la vis 20. Le trou 34 est radial. Le trou 34 est disposé au centre de la coque externe 10. Sur l'extérieur, le trou 34 peut présenter un lamage 44.

La coque externe 10 est réalisée en un matériau choisi parmi : pierre précieuse, pierre fine, pierre ornementale, cuir.

La coque interne 11 est ici réalisée en deux parties, chacune étant monobloc. Les deux parties sont symétriques par rapport à un plan passant par l'axe dans le mode de réalisation représenté. En variante, la coque interne 11 est monobloc. La coque interne 11 vient recouvrir la lumière 5 du côté intérieur, en d'autres termes du côté de l'alésage 3. La coque interne 11 s'insère entre les branches 8, 9. La coque interne 11 présente une épaisseur comprise entre 1,0 et 2,0 mm.

La coque interne 11 présente une forme d'arc. Les extrémités libres circonférentielles 30 de la coque interne 11 viennent en contact avec bord de la lumière 5. La coque interne 11 présente une surface extérieure 35 délimitant le logement 12. La surface extérieure 35 peut être substantiellement lisse. La surface extérieure 35 peut être droite en section selon un plan passant par l'axe. La surface extérieure 35 est distante de la surface intérieure 32 au moins en partie. La coque interne 11 présente une surface intérieure 36 affleurant l'alésage 3 du corps d'anneau 2. La coque interne 11 présente des bords en contact avec les bords intérieurs de la lumière 5. La coque interne 11 est plus longue, selon l'axe longitudinal, que l'ouverture de la lumière 5 et occupe un secteur angulaire plus grand. Ainsi, la coque interne 11 repose à l'état monté, sur le bord de la lumière 5, notamment sur la majorité du bord, de préférence sur tout le bord sauf, le cas échéant de manière ponctuelle. Le montage de la coque interne 11 sur le corps d'anneau 2 est effectué par l'extérieur, notamment selon une translation radiale.

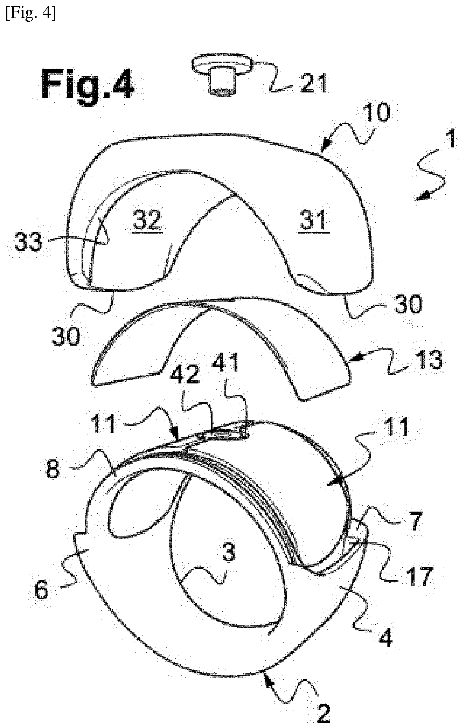

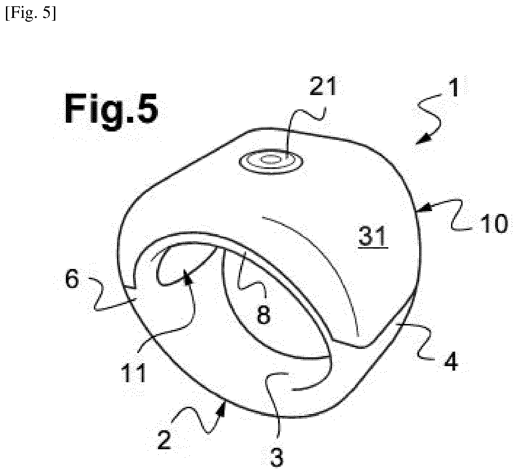

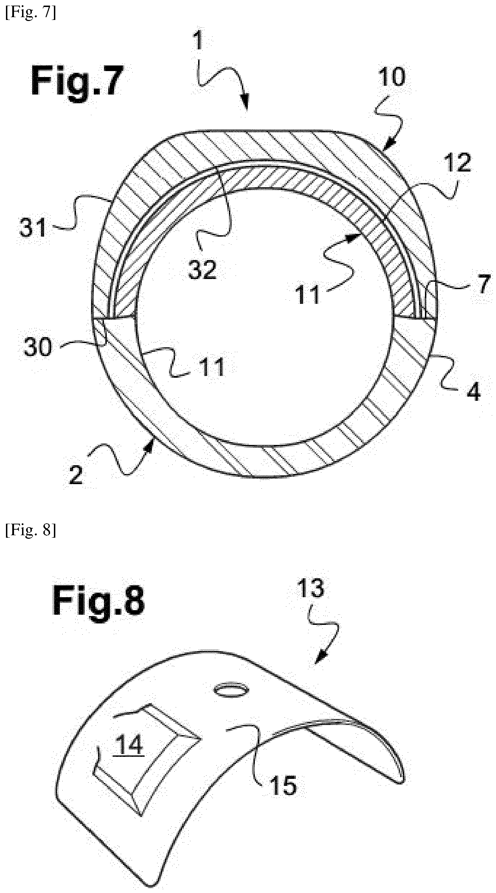

Une fois montée sur le corps d'anneau 2, la surface extérieure 35 affleure les concavités 17, voir [Fig.4]. La surface intérieure 32 affleure l'alésage 3, voir [Fig.7]. Les branches 8, 9 dépassent axialement de la coque interne 11, voir figures 4 et 5.

La coque interne 11 est réalisée en un matériau choisi parmi : pierre précieuse, pierre fine, pierre ornementale, cuir.

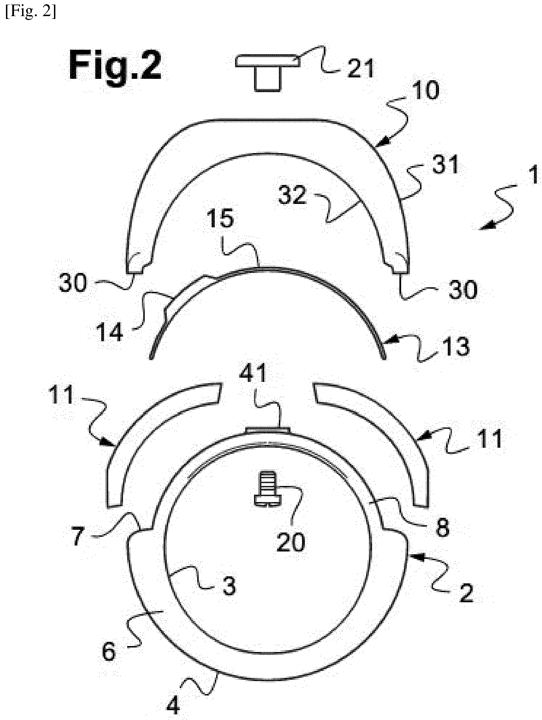

Dans le mode de réalisation représenté, le corps d'anneau 2 comprend une entretoise 40. L'entretoise 40 est orientée longitudinalement. L'entretoise 40 est parallèle à l'axe. L'entretoise 40 relie la branche 8 et la branche 9. L'entretoise 40 est montée sensiblement au milieu de la lumière 5. L'entretoise 40 est disposée au sommet du corps d'anneau 2. L'entretoise 40 affleure l'alésage 3, voir [Fig.2]. L'entretoise 40 présente une section rectangulaire avec un renflement 41 au milieu de ladite entretoise 40. Le renflement 41 est traversé par un trou 42. La vis 20 est insérée dans le trou 42, voir [Fig.2], pour la fixation des organes de la pièce de bijouterie 1. Le renflement 41 s'étend en largeur par rapport à l'entretoise 40, soit dans le sens circonférentiel par rapport au corps d'anneau 2. Le renflement 41 affleure l'alésage 3, voir [Fig.2]. Le renflement 41 est légèrement en saillie radiale par rapport aux branches 8,9, voir [Fig.2] et légèrement en creux radial par rapport à la surface extérieure 35 de la coque interne 11.

Dans un autre mode de réalisation, le corps d'anneau 2 est dépourvu d'entretoise. La coque interne est d'une seule pièce. La vis vient alors serrer la coque externe et la coque interne, la coque interne se montant par l'intérieur. La vis peut aussi venir en prise dans le corps d'anneau, par exemple dans l'une des braches 8, 9 ou dans les deux branches 8, 9.

Le tag 13 présente à plat une forme rectangulaire à coins arrondis. La puce électronique 14 forme une saillie par rapport au reste du tag 13. La surface intérieure 32 de la coque externe 10 présente un creux correspondant à distance des extrémités libres 30 et des nervures 33. La puce électronique 14 est décentrée par rapport à l'ensemble du tag 13. Au centre du tag 13, est ménagé un trou traversant pour la vis 20. L'antenne 15 est bobinée à plat autour de la puce électronique 14 et autour du trou. Le tag présente un corps en matériau suffisamment souple pour s'adapter à la courbure du logement 12.

Le montage du tag 13 est effectué après montage de la coque interne 11. La coque externe 10 est ensuite montée pour enfermer le tag 13 dans le logement 12. Le montage s'effectue à température ambiante. Avant le montage, le corps d'anneau peut faire l'objet d'étapes à température élevée, par exemple par soudure.

La vis 20 passe entre les deux parties de la coque interne 11. La vis 20 passe à travers le renflement 41, le tag 13 et la coque externe 10. La vis 20, le cas échéant avec l'écrou 21, maintient et serre la coque externe 10 contre le corps d'anneau 2. Les tolérances sont choisies de façon que la coque interne 11 soit également en maintien ferme. Le tag 13 est protégé.

Les coques externe 10 et interne 11 confèrent sa forme arquée au tag 13. De préférence, la coque externe 10 est opaque. La coque externe 10 consiste en une pierre précieuse, fine ou ornementale. Ladite pierre est choisie parmi : diamant, rubis, saphir, béryl (notamment émeraude, aigue-marine, héliodore ou morganite), tourmaline (notamment verdélite, rubellite, paraïba, indicolite ou schorl), topaze (notamment topaze, sky blue, topaze swiss blue, ou topaze london blue), grenat (notamment grenat démantoïde, grenat almandin, grenat tsavorite, grenat spessartite, grenat héssonite, grenat rhodolite ou grenat pyrope), quartz (notamment quartz œil de chat, quartz œil de faucon, quartz œil de tigre, quartz œil de taureau, aventurine, améthyste, citrine, prasiolite, quartz rose, quartz bleu, quart rouge ou quartz fumé), calcédoine (notamment agate, chrysoprase, cornaline, onyx, sardoine ou piétersite), jaspe (notamment jaspe rouge, jaspe sanguin ou jaspe héliotrope), feldspaths (notamment amazonite, pierre de lune, labradorite, ou pierre de soleil), opale (notamment opale de feu, cacholong ou opale noble), jade (notamment jade jadéite, jade néphrite ou charoïte,), péridot, tanzanite, iolite, zircon, cyanite, spinelle ou cristal de roche, kunzite, azurite, sodalite, turquoise, rhodonite, rhodochrosite, malachite, chrysocolle, sugilite, chrysobéryl, andalousite, diopside, pinolite, lapis-lazuli, nacre, corail, ambre, bois silicifié.

La coque externe 10 peut aussi être réalisée en cuir.

Une fois montée, la pièce de bijouterie 1 se compose du corps d'anneau 2 en matériau noble susceptible d'atténuer ou former écran à la transmission d'ondes vers l'antenne 15 ou de l'antenne 15 vers l'environnement extérieur, des coques interne 11 et externe 10 réalisées en un ou des matériaux laissant passer les ondes dans les gammes de fréquence habituelles, notamment pour RFID ou NFC. Le tag 13 est opérationnel.

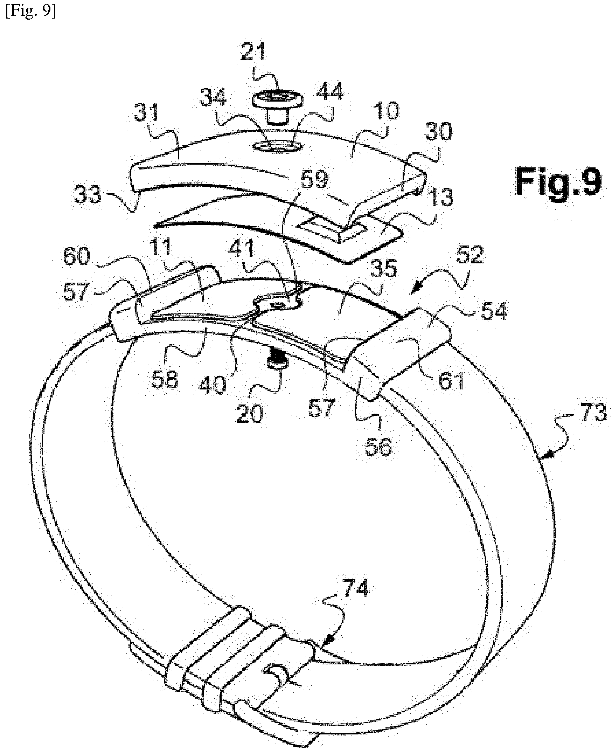

Dans le mode de réalisation des figures 9 à 14, la pièce de bijouterie 1 présente une forme générale en anneau fermé. Il peut s'agir d'un bracelet. La pièce de bijouterie 1 comprend un cadran 52 ou corps et un corps de bracelet 73. Le corps de bracelet 73 peut être souple, par exemple en cuir, en matière végétale, en tissu ; ou rigide articulé, par exemple en métal choisi parmi : or, argent, platine, titane, palladium, vermeil ou acier ; ou en matériau semi rigide, notamment métallique. Le corps de bracelet 73 est, ici, équipé d'un fermoir 74, par exemple à boucle et ardillon.

. Le cadran 52 présente une forme arquée. Le cadran 52 présente une surface intérieure 53, une surface extérieure 54 et une lumière 55 traversant le cadran 52 de la surface intérieure 53 à la surface extérieure 54. Des bords 56 du cadran 52 présentent une forme libre. Ici, les bords 56 du cadran 52 sont arrondis. Le cadran 52 présente, en projection, une forme rectangulaire avec deux branches 58, 59 distantes axialement selon l'axe de la pièce de bijouterie 1, les deux branches 58, 59 étant reliées l'une à l'autre. Les deux branches 58, 59 sont longitudinales. Les deux branches 58, 59 sont reliées par des branches transversales 60, 61. Les branches transversales 60, 61 sont, ici, droites. Les branches transversales 60, 61 sont profilées. Les branches transversales 60, 61 relient les extrémités des branches 58, 59.

Le cadran 52 est ici symétrique par rapport à un plan normal à l'axe de la pièce de bijouterie 1. Les deux branches 58, 59 espacées axialement délimitent la lumière 55. Chaque branche 58, 59 présente une forme d'arc. En coupe transversale, la branche 58, 59 est de section arrondie vers le bord 56 et vers la surface intérieure 53. A l'opposé de la surface intérieure 53, la section de la branche 58, 59 est, ici, droite, en particulier parallèle à l'axe de la surface intérieure 53. Vers la lumière 55, la section de la branche 58, 59 est droite, par exemple orientée radialement. Un redan peut être prévu pour faciliter le positionnement et le maintien d'autres organes ci-dessous. Le redan est ménagé sur le bord de la lumière 55 à l'opposé de la surface intérieure 53 et du bord 56, de manière continue ou discontinue, par exemple sur les branches 58, 59.

Les branches 58, 59 présentent une épaisseur sensiblement constante. Les branches 58, 59 forment une première portion de cadran 52 et sont reliées par une deuxième portion de cadran 52. La deuxième portion de cadran 52 comprend deux traverses symétriques par rapport à un plan médian. Une surface sensiblement radiale 57 est ainsi formée entre la première portion et la deuxième portion de chaque côté du cadran 52.

Le cadran 52 peut être réalisé en un matériau faisant obstacle à la transmission des ondes radio. Le cadran 52 est réalisé en un matériau choisi parmi : or, argent, platine, palladium, vermeil, titane ou acier.

La pièce de bijouterie 1 comprend une coque externe 10 formant une partie de la surface extérieure 54 de la pièce de bijouterie 1 et en contact avec le cadran 52. La pièce de bijouterie 1 comprend une coque interne 11 formant une partie de la surface intérieure 53 et en contact avec le cadran 52. Un logement 12 fermé à l'état monté est ménagé entre la coque externe 10 et la coque interne 11 sensiblement au droit de ou dans la lumière 55. Le logement 12 est en arc de cercle. La pièce de bijouterie 1 comprend un tag 13 souple disposé dans le logement 12. Le tag 13 comprend une puce électronique 14 et une antenne 15 disposée autour de la puce électronique 14.

La pièce de bijouterie 1 comprend une vis 20 maintenant ensemble la coque externe 10 et la coque interne 11. Dans le mode de réalisation représenté, est prévu en plus un écrou 21 formant un boulon avec la vis 20. La vis 20 présente une tête de faible épaisseur. La vis 20 est amenée par l'intérieur du corps d'anneau 2. L'écrou 21 est amené par l'extérieur. La vis 20 vient en prise avec l'écrou 21. La vis et l'écrou peuvent être dans le même matériau que le cadran 52 ou choisis dans le même groupe de matériaux. L'écrou peut comprendre en plus une pierre précieuse, fine ou ornementale.

La coque externe 10 est monobloc. La coque externe 10 vient recouvrir la lumière 55 du côté extérieur, en d'autres termes à l'opposé de la surface intérieure 53. La coque externe 10 peut aussi recouvrir en partie les branches 58, 59. La coque externe 10 présente une forme d'arc. La coque externe 10 présente une épaisseur comprise entre 1,0 et 3,0 mm.

Les extrémités libres circonférentielles 30 de la coque externe 10 viennent en contact avec les surfaces sensiblement radiales 57. Les extrémités libres circonférentielles 30 de la coque externe 10 peuvent être munies de bords droits pour coopérer avec le redan. La coque externe 10 présente une surface extérieure 31 libre pour une conception artistique ou pour supporter un autre organe. La coque externe 10 présente une surface intérieure 32 délimitant le logement 12. La surface intérieure peut être ménagée en creux par rapport à un cylindre formant une enveloppe géométrique de la coque externe 10 pour augmenter le volume du logement 12. Deux nervures 33 peuvent être formées en bordure dudit creux. Les nervures peuvent être en contact avec ledit redan des branches 58, 59.

Un trou 34, voir [Fig.6], traversant est ménagé dans la coque externe 10. En variante, le trou est borgne et fileté débouchant sur la surface intérieure 32 pour engagement avec la vis 20. Le trou 34 est radial. Le trou 34 est disposé au centre de la coque externe 10. Sur l'extérieur, le trou 34 peut présenter un lamage 44.

La coque externe 10 est réalisée en un matériau choisi parmi : pierre précieuse, pierre fine, pierres ornementales, cuir.

La coque interne 11 est ici réalisée en deux parties, chacune étant monobloc. Les deux parties sont symétriques par rapport à un plan passant par l'axe dans le mode de réalisation représenté. En variante, la coque interne 11 est monobloc. La coque interne 11 vient recouvrir la lumière 5 du côté intérieur, en d'autres termes du côté de la surface intérieure 53. La coque interne 11 s'insère entre les branches 58, 59. La coque interne 11 présente une épaisseur comprise entre 1,0 et 2,0 mm.

La coque interne 11 présente une forme d'arc. Les extrémités libres circonférentielles 30 de la coque interne 11 viennent en contact avec bord de la lumière 55. La coque interne 11 présente une surface extérieure 35 délimitant le logement 12. La surface extérieure 35 peut être substantiellement lisse. La surface extérieure 35 peut être droite en section selon un plan passant par l'axe. La surface extérieure 35 est distante de la surface intérieure 32 au moins en partie. La coque interne 11 présente une surface intérieure 36 affleurant la surface intérieure 53 du cadran 52. La coque interne 11 présente des bords en contact avec les bords intérieurs de la lumière 55. La coque interne 11 est plus longue, selon l'axe longitudinal, que l'ouverture de la lumière 55 et occupe un secteur angulaire plus grand. Ainsi, la coque interne 11 repose à l'état monté, sur le bord de la lumière 55, notamment sur la majorité du bord, de préférence sur tout le bord sauf, le cas échéant de manière ponctuelle. Le montage de la coque interne 11 sur le cadran 52 est effectué par l'extérieur, notamment selon une translation radiale.

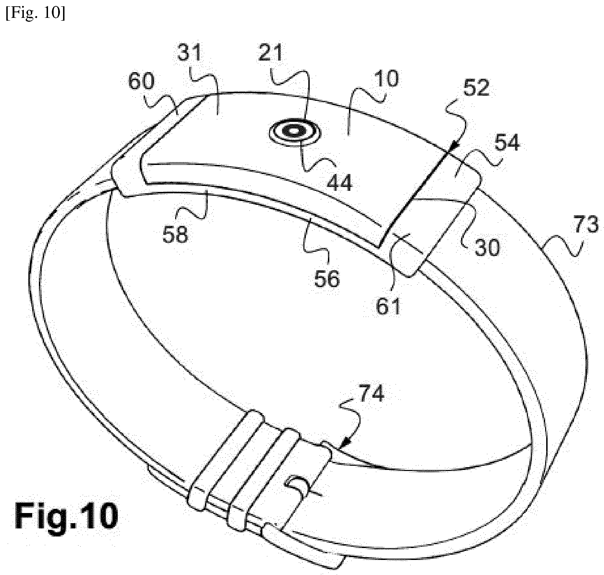

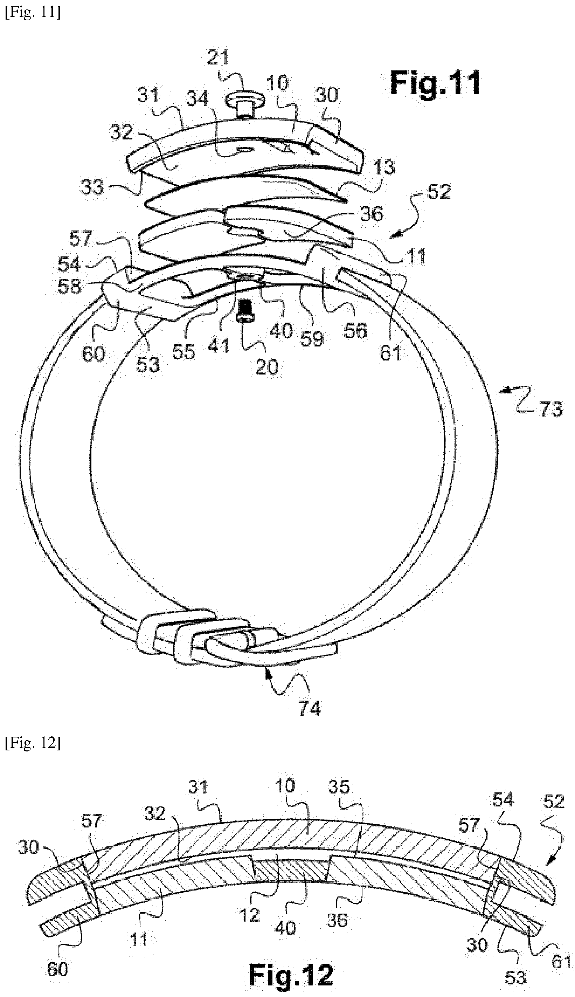

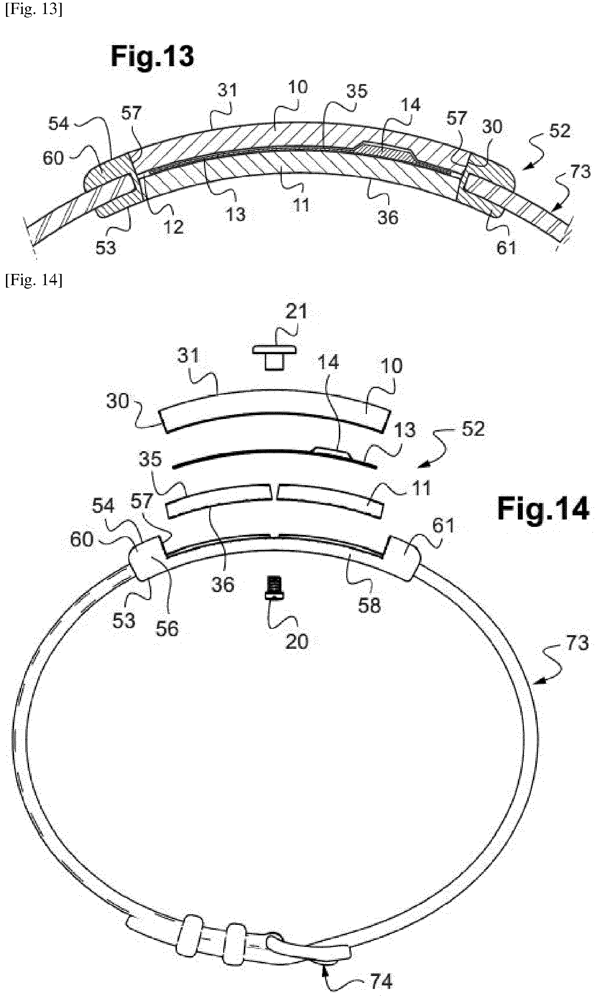

Une fois montée sur le cadran 52, la surface extérieure 35 affleure le redan, voir [Fig.12]. La surface intérieure 32 affleure surface intérieure 53, voir figures 12 & 13. Les branches 58, 59 dépassent axialement de la coque interne 11, voir figures 9 et 10.

La coque interne 11 est réalisée en un matériau choisi parmi : pierre précieuse, pierre fine, pierre ornementale, cuir.

Dans le mode de réalisation représenté, le cadran 52 comprend une entretoise 40. L'entretoise 40 est orientée longitudinalement. L'entretoise 40 est parallèle à l'axe. L'entretoise 40 relie la branche 58 et la branche 59. L'entretoise 40 est montée sensiblement au milieu de la lumière 55. L'entretoise 40 est disposée au sommet du cadran 52. L'entretoise 40 affleure la surface intérieure 53, voir [Fig.12]. L'entretoise 40 présente une section rectangulaire avec un renflement 41 au milieu de ladite entretoise 40. Le renflement 41 est traversé par un trou 42. La vis 20 est insérée dans le trou 42, voir figures 10 et 11, pour la fixation des organes de la pièce de bijouterie 1. Le renflement 41 s'étend en largeur par rapport à l'entretoise 40, soit dans le sens circonférentiel par rapport au cadran 52. Le renflement 41 affleure la surface intérieure 53, voir [Fig.11]. Le renflement 41 affleure une surface extérieure des branches 58, 59, voir [Fig.10].

Le tag 13 est analogue au tag du mode de réalisation précédent avec une courbure moindre. Le tag 13 présente un corps en matériau suffisamment souple pour s'adapter à la courbure du logement 12.

Le montage du tag 13 est effectué après montage de la coque interne 11. La coque externe 10 est ensuite montée pour enfermer le tag 13 dans le logement 12. Le montage s'effectue à température ambiante. Avant le montage, le cadran peut faire l'objet d'étapes à température élevée, par exemple par soudure.

La vis 20 passe entre les deux parties de la coque interne 11. La vis 20 passe à travers le renflement 41, le tag 13 et la coque externe 10. La vis 20, le cas échéant avec l'écrou 21, maintient et serre la coque externe 10 contre le cadran 52. Les tolérances sont choisies de façon que la coque interne 11 soit également en maintien ferme. Le tag 13 est protégé. La vis et l'écrou peuvent être dans le même matériau que le corps d'anneau 2 ou choisis dans le même groupe de matériaux. L'écrou peut comprendre en plus une pierre.

Les coques externe 10 et interne 11 confèrent sa forme arrondie au tag 13.

De préférence, la coque externe 10 est opaque.

Une fois montée, la pièce de bijouterie 1 se compose du cadran 52 en matériau noble susceptible d'atténuer ou former écran à la transmission d'ondes vers l'antenne 15 ou de l'antenne 15 vers l'environnement extérieur, des coques interne 11 et externe 10 réalisées en un ou des matériaux laissant passer les ondes dans les gammes de fréquence habituelles, notamment pour RFID ou NFC. Le tag 13 est opérationnel.

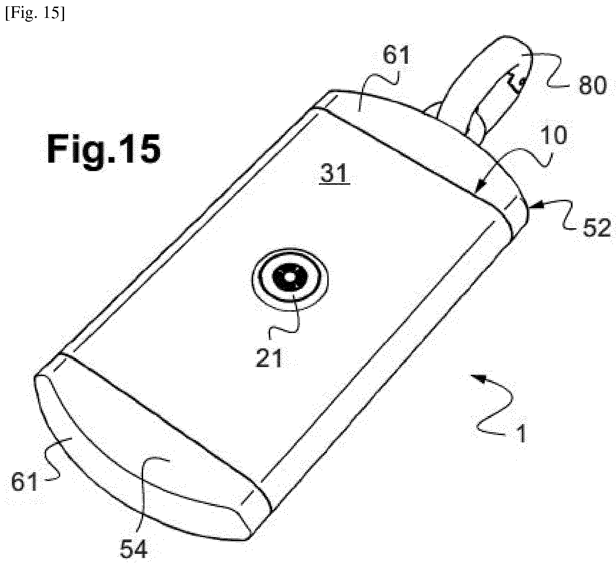

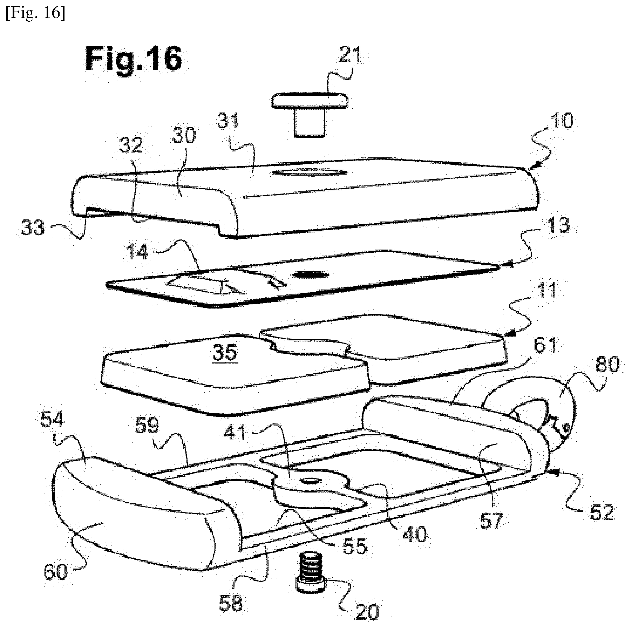

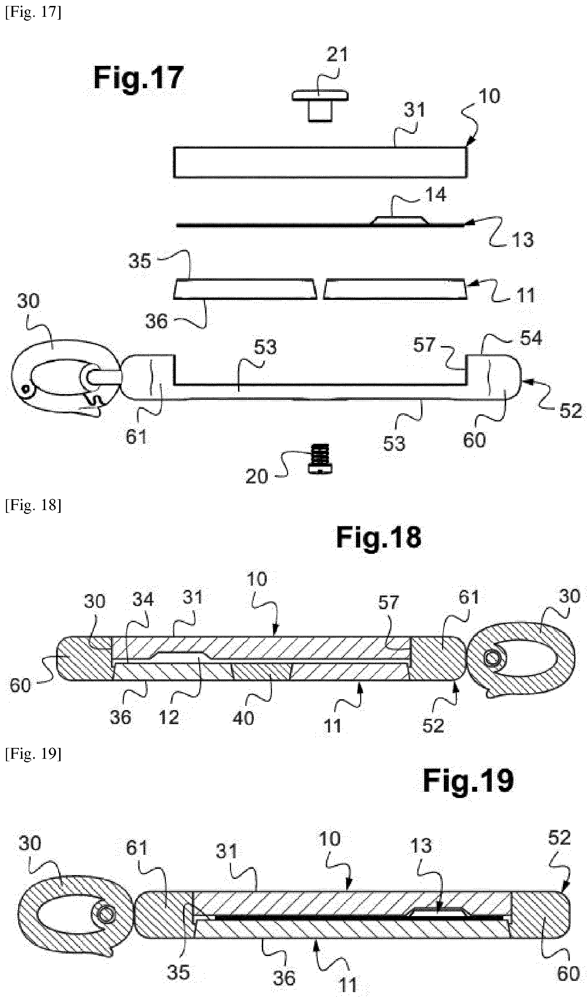

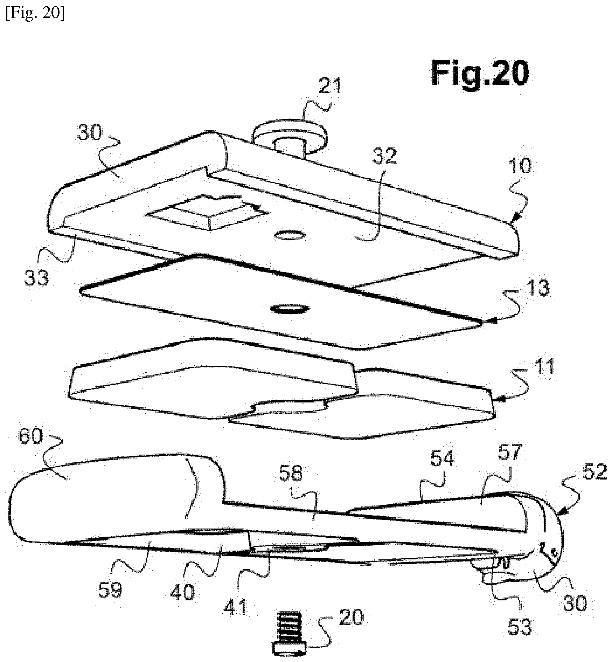

Dans le mode de réalisation des figures 15 à 20, la pièce de bijouterie 1 présente une forme générale plate. Il peut s'agir d'un pendentif. La pièce de bijouterie 1 est de structure analogue à celle du mode réalisation précédent. Le corps 52 est plat. Un anneau 80 est attaché à une extrémité du cadran 52

Les surface intérieure 53 et surface extérieure 54 sont parallèles. Le logement 12 est en forme de parallélépipède rectangle de faible épaisseur. Le tag 13 est plat.

## Revendications

1. Pièce de bijouterie (1), notamment bague ou bracelet ou pendentif, comprenant un corps (2) présentant une surface intérieure (3), une surface extérieure (4) et une lumière (5) traversant le corps (2) de la surface intérieure (3) à la surface extérieure (4), le corps (2) étant réalisé en un matériau choisi parmi : or, argent, platine, titane, palladium, acier ou vermeil; une coque externe (10) formant une partie de la surface extérieure de la pièce de bijouterie (1) et en contact avec le corps (2), la coque externe (10) étant réalisée en un matériau choisi parmi : pierre précieuse, pierre fine, pierre ornementale, cuir ; une coque interne (11) formant une partie de la surface intérieure (3) et en contact avec le corps (2), un logement (12) fermé étant ménagé entre la coque externe (10) et la coque interne (11) sensiblement au droit de ou dans la lumière (5), le logement (12) étant en arc de cercle, la coque interne (11) étant réalisée en un matériau choisi parmi : pierre précieuse, pierre fine, pierre ornementale, cuir; un tag (13) souple disposé dans le logement (12) et comprenant une puce électronique (14) et une antenne (15) disposée autour de la puce électronique (14), **caractérisé en ce qu'**une vis maintient ensemble la coque externe (10) et la coque interne (11).

2. Pièce de bijouterie selon la revendication 1, dans laquelle deux lumières (5) sont ménagées traversant le corps (2) de la surface intérieure à la surface extérieure, les deux lumières étant séparées par une traverse (40) faisant partie du corps (2).

3. Pièce de bijouterie selon la revendication 2, dans laquelle la vis (20) est en prise dans la traverse (40).

4. Pièce de bijouterie selon la revendication 1, dans laquelle la vis (20) est en prise dans le corps (2) au voisinage d'un bord de la lumière (5), une vis supplémentaire étant en prise dans le corps (2) au voisinage d'un bord de la lumière du côté opposé.

5. Pièce de bijouterie selon l'une des revendications précédentes, dans laquelle la vis (20) coopère avec un alésage fileté ménagé dans le corps (2) ou avec un écrou (21).

6. Pièce de bijouterie selon l'une des revendications précédentes, dans laquelle le corps (2) est monobloc.

7. Pièce de bijouterie selon l'une des revendications précédentes, dans laquelle la coque externe (10) présente une épaisseur comprise entre 1,0 et 3,0 mm et la coque interne présente une épaisseur comprise entre 1,0 et 2,0 mm.

8. Pièce de bijouterie selon l'une des revendications précédentes, dans laquelle ladite pierre précieuse, fine ou ornementale est choisie parmi :
• Diamant, Rubis, Saphir,
• Béryl, notamment émeraude, aigue-Marine, héliodore, morganite,
• Tourmaline, notamment verdélite, rubellite, paraïba, indicolite, schorl,
• Topaze, notamment topaze sky blue, topaze swiss blue, topaze London blue,
• Grenat, notamment grenat demantoïde, grenat almandin, grenat tsavorite, grenat spessartite, grenat hessonite, grenat rhodolite, grenat pyrope,
• Quartz, notamment quartz œil de chat, quartz œil de faucon, quartz œil de tigre, quartz œil de taureau, aventurine, améthyste, citrine, prasiolite, quartz rose, quartz bleu, quart rouge, quartz fumé,
• Calcédoine notamment agate, chrysoprase, cornaline, onyx, sardoine, piétersite,
• Jaspe notamment jaspe rouge, jaspe sanguin, jaspe héliotrope,
• Feldspaths notamment amazonite, pierre de lune, labradorite, pierre de soleil,
• Opale, notamment opale de feu, cacholong, opale noble,
• Jade notamment jade, jadéite, jade néphrite, charoïte,
• Péridot, tanzanite, iolite, zircon, cyanite, spinelle, cristal de roche, kunzite,
sodalite, azurite, turquoise, rhodonite, rhodochrosite, malachite, chrysocolle, sugilite, chrysobéryl, andalousite, diopside, pinolite, lapis-lazuli,
• Nacre, corail, ambre, bois silicifié.

9. Pièce de bijouterie selon l'une des revendications précédentes, dans laquelle la puce électronique (1) forme une protubérance par rapport à l'antenne (15) et la coque externe (10) présente une concavité locale correspondant à ladite protubérance.

10. Pièce de bijouterie selon l'une des revendications précédentes, dans laquelle le corps (2) admet un plan de symétrie passant par l'axe d'un anneau et présente sur sa surface extérieure un redan adapté à la coque externe (10).

11. Pièce de bijouterie selon l'une des revendications précédentes, dans laquelle le corps est un corps d'anneau.

## Patentansprüche

1. Schmuckstück (1), insbesondere Ring oder Armband oder Anhänger, umfassend einen Körper (2) mit einer Innenfläche (3), einer Außenfläche (4) und einer Öffnung (5), die von der Innenfläche (3) zu der Außenfläche (4) durch den Körper (2) verläuft, wobei der Körper (2) aus einem Material hergestellt ist, das ausgewählt ist aus: Gold, Silber, Platin, Titan, Palladium, Stahl oder Vermeil; eine Außenschale (10), die einen Teil der Außenfläche des Schmuckstücks (1) bildet und mit dem Körper (2) in Kontakt steht, wobei die Außenschale (10) aus einem Material hergestellt ist, das ausgewählt ist aus: Edelstein, Halbedelstein, Zierstein, Leder; eine Innenschale (11), die einen Teil der Innenfläche (3) bildet und mit dem Körper (2) in Kontakt steht, wobei ein geschlossenes Gehäuse (12) zwischen der Außenschale (10) und der Innenschale (11) im Wesentlichen senkrecht zu oder in der Öffnung (5) vorgesehen ist, wobei das Gehäuse (12) kreisbogenförmig ist, wobei die Innenschale (11) aus einem Material hergestellt ist, das ausgewählt ist aus: Edelstein, Halbedelstein, Zierstein, Leder; einen flexiblen Tag (13), der im Gehäuse (12) angeordnet ist und einen elektronischen Chip (14) und eine um den elektronischen Chip (14) herum angeordnete Antenne (15) umfasst, **dadurch gekennzeichnet, dass** eine Schraube die Außenschale (10) und die Innenschale (11) zusammenhält.

2. Schmuckstück nach Anspruch 1, wobei zwei Öffnungen (5) vorgesehen sind, die von der Innenfläche zu der Außenfläche durch den Körper (2) verlaufen, wobei die beiden Öffnungen durch einen Steg (40) getrennt sind, der einen Teil des Körpers (2) bildet.

3. Schmuckstück nach Anspruch 2, wobei die Schraube (20) in den Steg (40) eingreift.

4. Schmuckstück nach Anspruch 1, wobei die Schraube (20) in der Nähe einer Kante der Öffnung (5) in den Körper (2) eingreift, wobei eine zusätzliche Schraube in der Nähe einer Kante der Öffnung auf der gegenüberliegenden Seite in den Körper (2) eingreift.

5. Schmuckstück nach einem der vorhergehenden Ansprüche, wobei die Schraube (20) mit einer vorgesehenen Gewindebohrung im Körper (2) oder mit einer Mutter (21) zusammenwirkt.

6. Schmuckstück nach einem der vorhergehenden Ansprüche, wobei der Körper (2) einteilig ist.

7. Schmuckstück nach einem der vorhergehenden Ansprüche, wobei die Außenschale (10) eine Dicke zwischen 1,0 und 3,0 mm aufweist und die Innenschale eine Dicke zwischen 1,0 und 2,0 mm aufweist.

8. Schmuckstück nach einem der vorhergehenden Ansprüche, wobei der Edel-, Halbedel- oder Zierstein ausgewählt ist aus:
• Diamant, Rubin, Saphir,
• Beryll, insbesondere Smaragd, Aquamarin, Heliodor, Morganit,
• Turmalin, insbesondere Verdelit, Rubellit, Paraiba, Indigolith, Schörl,
• Topas, insbesondere himmelblauer Topas, schweizerblauer Topas, London blauer Topas,
• Grenat, insbesondere Demantoid-Grenat, Almandin-Grenat, Tsavorit-Grenat, Spessartin-Grenat, Hessonit-Grenat, Rhodolith-Grenat, Pyrop Grenat,
• Quarz, insbesondere Katzenaugenquarz, Falkenaugenquarz, Tigeraugenquarz, Bullaugenquarz, Aventurin, Amethyst, Citrin, Prasiolith, Rosenquarz, Blauer Quarz, Roter Quarz, Rauchquarz,
• Chalcedon, insbesondere Achat, Chrysopras, Karneol, Onyx, Sardonyx, Pietersit,
• Jaspis, insbesondere roter Jaspis, Blutjaspis, heliotroper Jaspis,
• Feldspath, insbesondere Amazonit, Mondstein, Labradorit, Sonnenstein,
• Opal, insbesondere Feueropal, Cacholong, Edelopal,
• Jade, insbesondere Jade, Jadeit, Jade-Nephrit, Charoit,
• Peridot, Tansanit, Iolith, Zirkon, Cyanit, Spinell, Bergkristall, Kunzit,
Sodalith, Azurit, Türkis, Rhodonit, Rhodochrosit, Malachit, Chrysokoll, Sugilith, Chrysoberyl, Andalusit, Diopsid, Pinolith, Lapislazuli,
• Perlmutt, Koralle, Bernstein, Kieselholz.

9. Schmuckstück nach einem der vorhergehenden Ansprüche, wobei der elektronische Chip (1) einen Vorsprung gegenüber der Antenne (15) bildet und die Außenschale (10) eine lokale Vertiefung aufweist, die dem Vorsprung entspricht.

10. Schmuckstück nach einem der vorhergehenden Ansprüche, wobei der Körper (2) eine durch die Achse eines Rings verlaufende Symmetrieebene aufnimmt und an seiner Außenfläche eine an die Außenschale (10) angepasste Stufe aufweist.

11. Schmuckstück nach einem der vorhergehenden Ansprüche, wobei der Körper ein Ringkörper ist.

## Claims

1. A piece of jewellery (1), in particular a ring or bracelet or pendant, comprising a body (2) having an internal surface (3), an external surface (4), and a lumen (5) passing through the body (2) from the internal surface (3) to the external surface (4), the body (2) being made of a material selected from: gold, silver, platinum, titanium, palladium, steel or vermeil; an outer shell (10) forming a part of the external surface of the piece of jewellery (1) and in contact with the body (2), the outer shell (10) being made of a material selected from: precious stone, semiprecious stone, ornamental stone, leather; an inner shell (11) forming a part of the internal surface (3) and in contact with the body (2), a closed housing (12) being provided between the outer shell (10) and the inner shell (11), substantially perpendicular to or in the lumen (5), the housing (12) being in an arc of circle, the inner shell (11) being made of a material selected from: precious stone, semiprecious stone, ornamental stone, leather; a flexible tag (13) disposed in the housing (12) and comprising an electronic chip (14) and an antenna (15) disposed around the electronic chip (14), **characterised in that** a screw holds the outer shell (10) and the inner shell (11) together.

2. The piece of jewellery according to claim 1, wherein two lumens (5) are provided passing through the body (2) from the internal surface to the external surface, the two lumens being separated by a cross member (40) that is part of the body (2).

3. The piece of jewellery according to claim 2, wherein the screw (20) is engaged in the cross member (40) .

4. The piece of jewellery according to claim 1, wherein the screw (20) is engaged in the body (2) in the vicinity of an edge of the lumen (5), an additional screw being engaged in the body (2) in the vicinity of an edge of the lumen on the opposite side.

5. The piece of jewellery according to one of the preceding claims, wherein the screw (20) cooperates with a threaded bore provided in the body (2) or with a nut (21).

6. The piece of jewellery according to one of the preceding claims, wherein the body (2) is as one-piece.

7. The piece of jewellery according to one of the preceding claims, wherein the outer shell (10) has a thickness of between 1.0 and 3.0 mm and the inner shell has a thickness of between 1.0 and 2.0 mm.

8. The piece of jewellery according to one of the preceding claims, wherein said precious, semiprecious or ornamental stone is selected from:
• Diamond, ruby, sapphire,
• Beryl, especially emerald, aquamarine, heliodor, morganite,
• Tourmaline, especially verdelite, rubellite, paraiba, indicolite, schorl,
• Topaz, especially sky blue topaz, Swiss blue topaz, London blue topaz,
• Garnet, especially demantoid garnet, almandine garnet, tsavorite garnet, spessartite garnet, hessonite garnet, rhodolite garnet, pyrope garnet,
• Quartz, especially cat's eye quartz, falcon's eye quartz, tiger's eye quartz, bull's eye quartz, aventurine, amethyst, citrine, prasiolite, rose quartz, blue quartz, red quartz, smoky quartz,
• Chalcedony, especially agate, chrysoprase, carnelian, onyx, sard, pietersite,
• Jasper, especially red jasper, blood jasper, heliotrope jasper,
• Feldspars, especially amazonite, moonstone, labradorite, sunstone,
• Opal, especially fire opal, cacholong, noble opal,
• Jade, in particular jade, jadeite, nephrite jade, charoite,
• Peridot, tanzanite, iolite, zircon, cyanite, spinel, rock crystal, kunzite,
sodalite, azurite, turquoise, rhodonite, rhodochrosite, malachite, chrysocolla, sugilite, chrysoberyl, andalusite, diopside, pinolite, lapis lazuli,
• Mother of pearl, coral, amber, silicified wood.

9. The piece of jewellery according to one of the preceding claims, wherein the electronic chip (1) forms a protrusion with respect to the antenna (15) and the outer shell (10) has a local concavity corresponding to said protrusion.

10. The piece of jewellery according to one of the preceding claims, wherein the body (2) admits a plane of symmetry passing through the axis of a ring and has, on its external surface, a step adapted to the outer shell (10).

11. The piece of jewellery according to one of the preceding claims, wherein the body is a ring body.
